# EUROPÄISCHE PATENTSCHRIFT

(11) **EP 0 480 283 B1**
(45) Veröffentlichungstag und Bekanntmachung des Hinweises auf die Patenterteilung: **15.06.1994**
(21) Anmeldenummer: 91116674.2
(22) Anmeldetag: 30.09.1991
(51) Int. Cl.: B23B 31/00, B23Q 11/00

(54) **Werkzeugmaschine**
Machine tool
Machine-outil

(30) Priorität: 09.10.1990 DE 4031991
(43) Veröffentlichungstag der Anmeldung: 15.04.1992
(73) Patentinhaber: CHIRON-WERKE GMBH & CO. KG, 78532 Tuttlingen (DE)
(72) Erfinder: Rütschle, Eugen, Dipl.-Ing., W-7202 Mühlheim/Donau (DE); Winkler, Hans-Henning, Dipl.-Ing., W-7200 Tuttlingen (DE); Haninger, Rudolf, W-7201 Seitingen-Oberflacht (DE)
(74) Vertreter: Witte, Alexander, Dr.-Ing.

(56) Entgegenhaltungen:
- EP-A- 0 185 889
- DE-A- 3 001 972
- DE-A- 3 233 934
- FR-A- 2 373 361
- US-A- 3 056 319
- US-A- 4 504 824
- PATENT ABSTRACTS OF JAPAN vol. 9, no. 290 (M-430)(2013)16. November 1985 & JP-A-60 131 123 ( SODEITSUKU ) 12. Juli 1985

## Beschreibung

Die Erfindung betrifft eine Werkzeugmaschine mit einer in einem Spindelstock umlaufenden Spindel, mit zumindest einem Greifer, der einen Werkzeughalter aus einer ungekuppelten Stellung in eine kuppelbare Stellung in die Spindel einsetzt, und mit Kupplungsmitteln zum Überführen des in der kuppelbaren Stellung befindlichen Werkzeughalters in einen gekuppelten Zustand, in dem der Werkzeughalter drehfest mit der Spindel verbunden ist, wobei ein Sensor zum Erkennen des eingenommenen gekuppelten Zustandes vorgesehen ist und wobei die Kupplungsmittel einen an der Spindel längsverschieblich gelagerten und zwischen zumindest zwei Lagen relativ zu der Spindel verschiebbaren Mitnehmer umfassen, der in dem gekuppelten Zustand des Werkzeughalters in eine an diesem vorgesehene Ausnehmung eingreift.

Eine Werkzeugmaschine der vorstehend genannten Art ist aus der DE-A 32 33 9-34 bekannt.

Bei dieser bekannten Werkzeugmaschine ist in der Spindel ein axial auslenkbarer Luftkolben vorgesehen. Der Luftkolben betätigt einen Querbolzen in einer Zugstange, mit der Werkzeuge in die Spindel ein- bzw. ausspannbar sind. Seitlich von dem Luftkolben ist ein Magnetschalter vorgesehen, der im eingezogenen Zustand der Zugspindel axial vom Luftkolben beabstandet ist, während im ausgefahrenen Zustand der Zugstange der untere Rand des Luftkolbens in Wechselwirkung mit dem Magnetschalter steht. Auf diese Weise kann der gekuppelte bzw. der ungekuppelte Zustand detektiert werden.

Diese Erkennung ist jedoch grundsätzlich davon unabhängig, ob tatsächlich ein Werkzeug eingespannt wurde oder nicht. Die Bewegung des Luftkolbens ist nämlich unabhängig davon, ob sich ein Werkzeug in richtiger Position, in falscher Position oder überhaupt nicht in der Spindelaufnahme befindet.

Aus der US-A 45 04 824 ist eine Werkzeugmaschine bekannt, bei der mittels eines Druckluftschalters erkannt wird, ob ein Werkzeug tatsächlich eingespannt wurde, sich in falscher Position oder überhaupt nicht in der Spindelaufnahme befindet. Zu diesem Zweck wird Druckluft durch eine Reihe von Öffnungen in der Spindel zugeführt, wobei sich nur dann ein entsprechender Druck aufbaut, wenn das Werkzeug sich in richtiger Position in der Spindel befindet.

Mittels dieser Druckluftüberwachung kann jedoch nicht festgestellt werden, ob das in richtiger Position befindliche Werkzeug auch drehfest mit der Spindel verbunden ist.

Bei einer aus der DE-A 29 45 770 bekannten Werkzeugmaschine wird ein Werkzeughalter mit einem eingespannten Werkzeug mittels eines Greifarmes in die Spindel eingesetzt. Der Werkzeughalter ist mittels eines Wälzlagers leicht drehbar in dem Greifarm gehalten, so daß der Greifarm auch während des Arbeitens des Werkzeuges an dem Werkzeughalter verbleiben kann. Dadurch wird die Werkzeugwechselzeit vermindert, die erforderlich wäre, wenn nach dem Einspannen des Werkzeughalters der Greifarm wieder weggefahren und zum nachfolgenden Werkzeugwechsels wieder herangefahren werden müßte.

Um eine drehfeste Verbindung des Werkzeughalters mit der Spindel herzustellen, ist die dem Werkzeughalter zu weisende Stirnfläche der Spindel mit einem federnd gelagerten Mitnehmer versehen. Die gegenüberliegende Stirnseite des bereits koaxial zu der Spindel ausgerichteten Werkzeughalters ist mit einer oder mehreren Nuten versehen, die zur Aufnahme des Mitnehmers geeignet sind. Beim Einsetzen des Werkzeughalters in die Spindel stehen sowohl die Spindel als auch der Werkzeughalter still. Der Mitnehmer wird dabei in aller Regel nicht genau in die oder in eine der Nuten treffen, sondern vielmehr auf der ansonsten glatten Stirnfläche des Werkzeughalters aufsetzen, so daß der Mitnehmer gegen die Kraft der Feder in die Spindel zurückgedrückt wird. Die Spindel wird dann in Drehung versetzt und der Mitnehmer soll unter Entspannung der Feder in eine der Nuten des Werkzeughalters einfassen. Der Werkzeughalter wird dann vollends in die Spindel eingezogen und hydraulisch arretiert.

Diese Vorgehensweise setzt voraus, daß der Mitnehmer bei Drehung der Spindel auf der planen Stirnfläche des Werkzeughalters entlanggleitet und die entsprechende Nut "findet". Es wird also vorausgesetzt, daß die zwischen den Nutenstein und der Stirnfläche des Werkzeughalters vorliegende Reibung größer ist als die im Wälzlager herrschende Reibung.

Nachdem die Spindel in Drehung versetzt wurde, wird aus Sicherheitsgründen eine bestimmte Vorgabezeit abgewartet, bevor die Spannmittel den Werkzeughalter in die Spindeln einziehen. Dadurch soll sichergestellt werden, daß der Mitnehmer auf jeden Fall in die Nut eingerastet ist. Das Einrasten des Nutensteines in die entsprechende Nut sorgt u.a. dafür, daß der Werkzeughalter lagerichtig zu der Spindel ausgerichtet ist, was insbesondere bei Ausdrehwerkzeugen erforderlich ist.

Bei der bekannten Werkzeugmaschine ist wegen der hohen Vorgabezeit die Werkzeugwechselzeit unerwünscht lang.

Aus der DE-C 33 39 619 ist ein Werkzeughalter bekannt, in dessen Ringflansch ein sogenanntes Bremslager eingebaut ist. Während des Einführens des Werkzeughalters in die Spindel bremst das Bremslager den Werkzeughalter gegenüber der rotierenden Spindel ab, wenn der in der Spindel angeordnete Nutenstein mit der entsprechenden Stirnseite des Werkzeughalters in Anlage gelangt. Wegen der so hervorgerufenen Relativgeschwindigkeit zwischen der Spindel und dem Werkzeughalter kann der Nutenstein an der Stirnfläche entlanggleiten, die zugehörige Nut finden und in diese einrasten und somit einen Formschluß zwischen der rotierenden Spindel und dem Werkzeughalter herstellen.

Wenn der Werkzeughalter danach in die Spindel eingezogen ist, werden die unter Reibschluß aneinanderliegenden Flächen des Bremslagers voneinander abgehoben und der Werkzeughalter kann sich frei drehen.

Nachdem der Werkzeughalter in die einkuppelbare Stellung gebracht wurde, in welcher der Nutenstein an der Stirnfläche des Werkzeughalters entlanggleitet, wird auch bei dieser Anordnung eine bestimmte Vorgabezeit abgewartet, bevor angenommen wird, daß der Kupplungsmechanismus eingerastet ist und die Spannmittel den Werkzeughalter endgültig in die Spindel einziehen können.

Wegen der abzuwartenden Vorgabezeit ist auch hier die Werkzeugwechselzeit unerwünscht lang. Darüberhinaus sind die mit einem Bremslager versehenen Werkzeughalter konstruktiv sehr aufwendig und daher kostenintensiv. Insbesondere ist es von Nachteil, daß keine genormten Werkzeughalter verwendet werden können.

In der DE-C 36 20 364 wird daher ein Greifer vorgeschlagen, mit dem genormte Werkzeughalter unter Beibehaltung des oben beschriebenen Bremsmechanismus gehandhabt werden. Die genormten Werkzeughalter sind mit einer Ringschulter ausgebildet, die an ihrer Unterseite mit einer sich nach unten verjüngenden Kegelfläche versehen ist. An dem Greifer ist eine zweite sich ebenfalls nach unten verjüngende Kegelfläche vorgesehen, auf der die Kegelfläche des Werkzeughalters beim Einführen in die Spindel unter Reibung aufliegt, so daß der Werkzeughalter gegenüber dem Nutenstein verzögert wird. In der Arbeitsstellung des Werkzeughalters, also wenn die Spannmittel ihn in die Spindel eingezogen haben, sind die beiden Kegelflächen um einen Luftspalt voneinander abgehoben, so daß der Werkzeughalter sich frei in dem Greifer drehen kann.

Auch bei dieser Anordnung ist eine Vorgabezeit erforderlich, um sicherzustellen, daß der Nutenstein in die entsprechende Nut eingreift, bevor die Spannmittel den Werkzeughalter einziehen und danach die Spindel von ihrer Kuppeldrehzahl auf Betriebsdrehzahl hochgefahren wird.

Der Erfindung liegt daher die Aufgabe zugrunde, eine Werkzeugmaschine der eingangs genannten Art dahingehend weiterzubilden, daß die Werkzeugwechselzeit verkürzt und die Sicherheit beim Einkuppeln erhöht werden.

Diese Aufgabe wird erfindungsgemäß dadurch gelöst, daß der Sensor die relative Lage des Mitnehmers zu der Spindel erkennt.

Die Aufgabe wird insbesondere deshalb vorteilhaft gelöst, weil das Überwachen des eingekuppelten Zustandes auf einfache Weise vor sich geht. Zum einen erkennt der Sensor, wenn der Mitnehmer mit der Stirnfläche des Werkzeughalters in Anlage und somit in die Spindel hineingedrückt ist. Der Sensor kann also melden, daß sich der Werkzeughalter in der kuppelbaren Stellung befindet, was er an der relativen Lage des Mitnehmers erkennt. Wenn der Mitnehmer jetzt an der Stirnfläche entlanggleitet und in die entsprechende Nut einrastet, so erkennt der Sensor auch dieses Einrasten. Unmittelbar nach dem Einrasten des Mitnehmers meldet der Sensor, daß der gekuppelte Zustand erreicht ist.

Diese Maßnahme bietet also nicht nur konstruktive Vorteile, auch unter dem Sicherheitsaspekt ist sie bevorzugt, denn mit Hilfe des Sensors ist genau festzustellen, wie lange der Mitnehmer braucht, bis er an der Stirnfläche entlanggleitend in die Ausnehmung eingerastet ist. Hierdurch läßt sich eine Aussage über die zwischen dem Werkzeughalter und dem Greifer wirkende Reibkraft gewinnen.

Weiterhin ist es bevorzugt, wenn der Sensor einen mit der Spindel umlaufenden Signalgeber umfaßt.

Diese Maßnahme ist besonders vorteilhaft, weil der Signalgeber sozusagen immer "vor Ort" ist, und nicht erst im ungünstigsten Fall eine Umdrehung der Spindel abgewartet werden muß, bis der Sensor den eingekuppelten Zustand erkennen kann. Auch hierdurch wird die Werkzeugwechselzeit deutlich verkürzt.

Hierbei ist es besonders bevorzugt, wenn der Signalgeber eine längsverschieblich an der Spindel gelagerte Signalstange aufweist, die dem Mitnehmer zugeordnet ist und der zu der Spindel relativen Bewegung des Mitnehmers folgt.

Bei dieser Maßnahme ist von Vorteil, daß keine Signallaufzeit zwischen dem Einrasten des Mitnehmers in die Nut und dem Melden des Signalgebers vergeht, der Mitnehmer selbst bildet sozusagen einen Teil des Signalgebers. Die Verschiebung der Signalstange kann beispielsweise optisch oder mechanisch detektiert werden. Bei der optischen Detektion ist es beispielsweise möglich, einen Lichtstrahl vcn der Signalstange in ihren unterschiedlichen Stellungen unterschiedlich reflektieren zu lassen. Zur mechanischen Detektion kann beispielsweise außerhalb der Spindel an dem Spindelstock ein die Spindel konzentrisch umgebender Schaltring vorgesehen sein, an dem die Signalstange entlanggleitet und den sich entsprechend ihrer Positionsveränderung mitnimmt.

In einem Ausführungsbeispiel ist es besonders bevorzugt, wenn Spannmittel vorgesehen sind, die den Werkzeughalter in die Spindel einsparnen, wenn der Sensor den eingenommenen, gekuppelten Zustand des Werkzeughalters erkannt hat.

Diese Maßnahme ist besonders vorteilhaft, weil unmittelbar nach dem Einkuppeln des Werkzeughalters dieser eingespannt wird. Auf diese Weise wird die Werkzeugwechselzeit gegenüber dem Stand der Technik deutlich verkürzt und andererseits sichergestellt, daß erst nach dem Einkuppeln des Werkzeughalters, wenn dieser also eine definierte Lage zu der Spindel eingenommen hat, die Spannmittel wirksam werden.

Weiterhin ist es bevorzugt, wenn eine Ablaufsteuerung vorgesehen ist, die die Spindel in ihrer Drehzahl hochfährt, wenn der Sensor den eingenommenen gekuppelten Zustand des Werkzeughalters erkannt hat.

Wie die vorherige hat auch diese Maßnahme den Vorteil, daß die Werkzeugmaschine unmittelbar nach dem Einkuppeln ihren Betriebszustand einnimmt, ohne daß überschüssige Vorgabezeit abzuwarten wäre.

Es ist ferner bevorzugt, wenn der Sensor eine dem Signalgeber zugeordnete Erfassungseinrichtung aufweist, die bezüglich des Spindelstockes drehfest angeordnet ist.

Diese Maßnahme ist insofern von Vorteil, als die Erfassungseinrichtung auf konstruktiv einfache Weise angeordnet werden kann. Als Erfassungseinrichtung kann beispielsweise ein optischer Empfänger vorgesehen sein, der einen von dem Signalgeber ausgehenden oder auch nur reflektierten Lichtstrahl detektiert.

Weiterhin ist es bevorzugt, wenn die Erfassungseinrichtung in jeder relativen Winkellage zwischen der Spindel und dem Spindelstock auf den Signalgeber anspricht.

Diese Maßnahme ist besonders vorteilhaft, weil das Einkuppeln an die Erfassungseinrichtung gemeldet wird, sobald der Kuppelvorgang abgeschlossen ist. Es ist nicht erforderlich, bis zu eine Umdrehung der Spindel abzuwarten, bevor der Signalgeber seine Information an die Erfassungseinrichtung weitergeben kann. Dies kann beispielsweise dadurch erreicht werden, daß längs des Umfanges um die Spindel verteilt mehrere optische Empfänger angeordnet sind, deren Empfangskegel einander überlappen, so daß der Signalgeber immer in dem Empfangskegel von zumindest einem Empfänger ist.

Weiterhin ist es bevorzugt, wenn der Sensor einen zu der Spindel konzentrischen Signalring aufweist, der an der Spindel axial gelagert ist, und der mit den Kupplungsmitteln derart zusammenwirkt, daß der Signalring bei in kuppelbarer Stellung befindlichem Werkzeughalter eine axial erste Stellung einnimmt, kontinuierlich mit einem ortsfesten Meßwertaufnehmer zusammenwirkt sowie in diesem ein erstes Signal erzeugt, und daß der Signalring bei in gekuppeltem Zustand befindlichem Werkzeughalter eine axial zweite Stellung einnimmt, ebenfalls kontinuierlich mit einem ortsfesten Meßwertaufnehmer zusammenwirkt sowie in diesem ein zweites Signal erzeugt.

Diese Maßnahme weist den bereits diskutierten Vorteil der kontinuierlichen Signalübertragung zwischen dem Signalgeber und der Erfassungseinrichtung auf, so daß das Einnehmen des gekuppelten Zustandes augenblicklich erkannt und gemeldet wird. Hier ist entweder eine optische Detektion - wie oben beschrieben - möglich, oder die Verwendung eines induktiven Weggebers oder Näherungsschalters, der von dem Signalring in einer seiner Stellungen bedämpft wird. Der induktive Geber weist somit zwei Zustände auf, von denen einer beispielsweise dem auf der Stirnfläche des Werkzeughalters entlanggleitenden eingedrückten Mitnehmer entspricht und der andere der in die Nut eingerasteten Stellung des Mitnehmers oder der gänzlich von dem Werkzeughalter freigegebenen Stellung des Mitnehmers -die einander identisch sind - entspricht. Der Mitnehmer durchläuft während des Einsetzens und Einkuppelns eines Werkzeughalters die folgenden Zustände:

Zunächst ist der induktive Geber bedämpft, was einerseits anzeigt, daß er funktionsfähig ist, und andererseits, daß sich noch kein Werkzeughalter mit dem Mitnehmer in Anlage befindet. Wenn jetzt ein Werkzeughalter über seine Stirnfläche den Mitnehmer in die Spindel eindrückt, geht der induktive Geber in den ungedämpften Zustand über und zeigt somit an, daß sich ein Werkzeughalter in der kuppelbaren Stellung befindet. Wenn jetzt der Mitnehmer in die Nut einrastet, wird der induktive Geber wieder bedämpft und zeigt somit das Vorliegen des gekuppelten Zustandes an. Diese Signalfolge stößt eine entsprechende Steuerung an, die für das Einziehen der Spannmittel und/oder das Hochfahren der Spindel auf Betriesdrehzahl sorgt, wenn der Werkzeughalter eingekuppelt wurde.

Weiterhin ist es bevorzugt, wenn der Greifer den Werkzeughalter bei umlaufender Spindel in die kuppelbare Stellung bringt.

Diese an sich bekannte Maßnahme hat den Vorteil, daß die Werkzeugspindel nicht zunächst völlig abgestoppt werden muß. Auch hierdurch reduziert sich die Werkzeugwechselzeit, denn eine mit niedriger Kupplungsdrehzahl umlaufende Spindel läßt sich schneller auf Betriebsdrehzahl hochfahren, als eine stehende Spindel.

Weiterhin ist es bevorzugt, wenn der Werkzeughalter drehbar in dem Greifer gelagert ist und auch im gekuppelten Zustand in diesem verbleibt.

Diese an sich ebenfalls bekannte Maßnahme hat den Vorteil, daß der Greifer nach dem Einkuppeln nicht wieder weggefahren und vor dem nächsten Werkzeugwechsel wieder herangefahren werden muß. Auch hierdurch reduziert sich die Werkzeugwechselzeit beträchtlich.

Weiterhin ist es bevorzugt, wenn der Greifer zur Aufnahme eines genormten Werkzeughalters eingerichtet ist und eine Kegelfläche aufweist, wobei der Werkzeughalter beim Einführen in die rotierende Spindel mit seiner Kegelfläche unter Reibung auf der Kegelfläche des Greifers aufliegt und nach dem Einkuppeln des Werkzeughalters von dieser um einen Luftspalt abgehoben ist.

Diese Maßnahme hat den Vorteil, daß genormte Werkzeughalter verwendet werden können, wie beispielsweise Steilkegel - 30- oder Steilkegel - 40-Werkzeughalter.

Weitere Vorteile ergeben sich aus der Beschreibung und der beigefügten Zeichnung.

In der Zeichnung ist ein Ausführungsbeispiel der Erfindung dargestellt und wird in der nachfolgenden Beschreibung näher erläutert. Es zeigen:
- Fig. 1: eine schematische Schnittdarstellung längs der Spindelachse einer erfindungsgemäßen Werkzeugmaschine, im Ausschnitt und teilweise gebrochen, wobei sich der Werkzeughalter in einer ungekuppelten Stellung befindet;
- Fig. 2: eine Darstellung wie Fig. 1, wobei sich der Werkzeughalter jedoch in der kuppelbaren Stellung befindet;
- Fig. 3: eine Ansicht entlang des Pfeiles III aus Fig. 2 von oben auf den Werkzeughalter; und
- Fig. 4: eine Ansicht wie Fig. 2, wobei sich der Werkzeughalter im gekuppelten Zustand befindet.

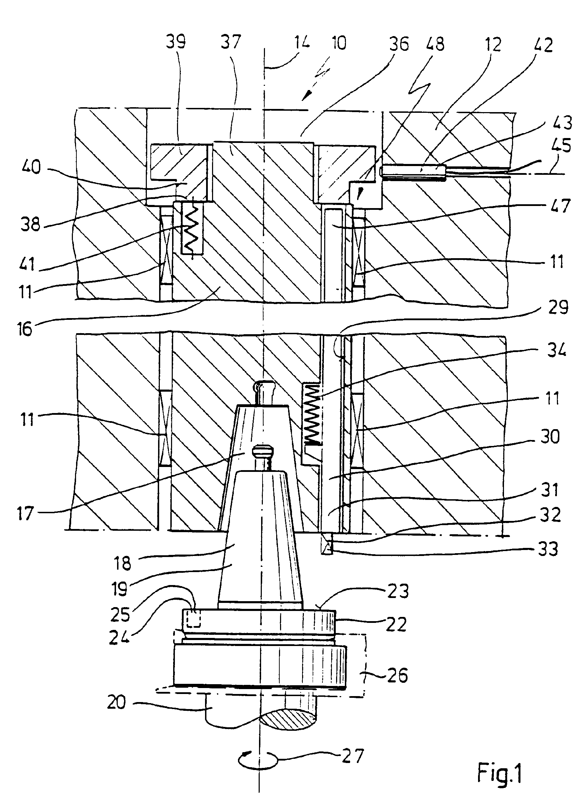

In Fig. 1 ist in einer schematischen Schnittdarstellung und im Ausschnitt eine Werkzeugmaschine 10 dargestellt. Die Werkzeugmaschine 10 umfaßt eine mittels Lagern 11 in einem Spindelstock 12 um ihre Spindelachse 14 drehbar gelagerte Spindel 16. Die Spindel 16 ist in an sich bekannter Weise mit einer in Fig. 1 nicht zu erkennenden Antriebseinrichtung verbunden. Für die Antriebseinrichtung ist eine ebenfalls nicht dargestellte Ablaufsteuerung vorgesehen, über die die Spindel auf verschiedene Drehzahlen gefahren werden kann.

Die Spindel weist an ihrem unteren Ende eine Aufnahme 17 für einen Werkzeughalter 18 auf, der in dem gezeigten Ausführungsbeispiel einen Steilkegel 19 umfaßt, wie dies beispielsweise bei den genormten Werkzeughaltern vom Typ Steilkegel-30 oder Steilkegel- 40-Werkzeughalter der Fall ist.

Der Werkzeughalter 18 weist an seinem von dem Steilkegel 19 weg weisenden Ende einen zylindrischen Schaft 20 auf, in dem ein in Fig. 1 nicht gezeigtes Werkzeug eingespannt ist. Etwa mittig zwischen dem Steilkegel 19 und dem zylindrischen Schaft 20 ist an dem Werkzeughalter 18 eine radial vorspringende Ringschulter 22 vorgesehen, die eine auf den Steilkegel 19 zu weisende ringförmig umlaufende Stirnfläche 23 trägt. In der Stirnfläche 23 ist eine bei 24 angedeutete Nut als Ausnehmung 25 vorgesehen, deren Funktion noch näher beschrieben werden wird. Wie bei genormten Werkzeughaltern 18 üblich, können mehrere - z.B. zwei - Nuten vorgesehen sein. In Fig. 1 ist jedoch nur eine Nut 24 dargestellt.

Der Werkzeughalter 18 ist in an sich ebenfalls bekannter Weise von einem bei 26 angedeuteten Greifer gehalten, der Teil eines ebenfalls nicht dargestellten Greifarmes ist. Mittels des Greifarmes kann der Werkzeughalter beispielsweise aus einer Magazinposition entnommen und in die Aufnahme 17 der Spindel 16 eingesetzt werden.

In der in Fig. 1 gezeigten Stellung des Werkzeughalters 18 befindet sich dieser in axialer Ausrichtung zu der Spindelachse 14, ist aber noch nicht in einer Stellung, in der er mit der Spindel 16 kuppelbar ist, die Spindel 16 selbst läuft jedoch bereits mit langsamer Kupplungsdrehzahl, wie dies bei 27 angedeutet ist. Die Kupplungsdrehzahl liegt bei dieser Werkzeugmaschine 10 im Bereich zwischen 120 und 200 Umdrehungen pro Minute.

In der Spindel 16 ist eine parallel zu der Spindelachse 14 verlaufende und die Spindel 16 in Längsrichtung durchsetzende Bohrung 29 vorgesehen, in der eine Signalstange 30 längsverschieblich geführt ist. Die Signalstange 30 dient als noch näher zu beschreibender Signalgeber 31 und weist an ihrem unteren Ende einen Mitnehmer 32 in Form eines Nutensteines 33 auf, der zum drehfesten Verriegeln des Werkzeughalters 18 mit der Spindel 16 in die Ausnehmung 25 eingreifen soll.

Die Signalstange 30 ist mittels einer bei 34 lediglich schematisch angedeuteten Druckfeder in die in Fig. 1 gezeigte Stellung vorgespannt, in welcher der Nutenstein 33 nach unten über die Spindel 16 hinausragt. Der Mitnehmer 32 und die Druckfeder 34 entsprechen üblichen Kupplungsmitteln 35, die zum Kuppeln des Werkzeughalters 18 mit der Spindel 16 dienen.

Die Spindel 16 trägt an ihrem oberen von der Aufnahme 17 abgelegenen Ende 36 einen zu der Spindelachse 14 konzentrischen zylindrischen Fortsatz mit geringerem radialen Durchmesser als die Spindel 16 selbst. Der zylindrische Fortsatz 37 geht unter Ausbildung einer Schulter 38 in die Spindel 16 über.

Auf dem zylindrischen Fortsatz 37 steckt ein stufiger Signalring 39, der zu der Spindel 16 konzentrisch ist und bei der in Fig. 1 gezeigten Stellung des Werkzeughalters 18 mit seinem unteren Ringflansch 40 auf der Schulter 38 aufliegt. Es ist zu erkennen, daß der Ringflansch 40 einen geringeren Außendurchmesser aufweist als der Signalring 39. Der Signalring 39 und der einstückig mit diesem ausgebildete Ringflansch 40 sind in dem gezeigten Ausführungsbeispiel aus Messing gefertigt.

In der Spindel 16 sind längs ihres Umfanges verteilt Zugfedern 41 vorgesehen, von denen in Fig. 1 eine gezeigt ist. Die Zugfedern 41 sind einen Endes mit der Spindel 16 und anderen Endes mit dem Ringflansch 40 verbunden und ziehen so den Signalring 39 auf die Schulter 38.

Dem Signalring 39 ist eine Erfassungseinrichtung 42 zugeordnet, die ortsfest in dem Spindelstock 12 angeordnet ist. In dem gezeigten Ausführungsbeispiel ist die Erfassungseinrichtung 42 ein induktiver Näherungsgeber 43.

Wie in Fig. 1 zu erkennen ist, ist der induktive Näherungsschalter 43 drehfest mit dem Spindelstock 12 verbunden. Der Näherungsschalter 43 befindet sich auf einer bei 45 angedeuteten Höhe, die derart gewählt ist, daß der auf der Schulter 38 aufliegende Signalring 39 das Feld des induktiven Näherungsschalters 43 optimal bedämpft. Obwohl die Spindel 16 mit Kupplungsdrehzahl 27 umläuft, wird auf diese Weise durch den Signalring 39 für eine dauernde Bedämpfung des Näherungsschalters 43 gesorgt.

Weiterhin ist aus Fig. 1 zu entnehmen, daß die Bohrung 29, in der die Signalstange 30 geführt ist, in die Ringschulter 38 mündet, so daß die Signalstange 30 mit ihrem oberen Ende 47 mit dem Ringflansch 40 des Signalringes 39 in Anlage bringbar ist. Bei aus der Ausnehmung 17 herausgefahrenem Werkzeughalter 18 jedoch liegt der Ringflansch 40 auf der Schulter 38 auf und ist von der Signalstange 30 freigegeben. Der Ringflansch 40 kann jedoch dauernd auf der Signalstange 30 aufliegen, und so mit Hilfe der Zugfedern 41 die Druckfeder 34 beim nach unten Drücken der Signalstange 30 und damit des Nutensteines 33 unterstützen.

Auf diese Weise bilden der Signalgeber 31, der die Signalstange 30 und den Signalring 39 umfaßt, zusammen mit der Erfassungseinrichtung 42 einen Sensor 48, der in dem in Fig. 1 gezeigten Zustand anzeigt, daß der Mitnehmer 32 vollständig freigegeben ist.

Die ein Mal pro Umdrehung der Spindel 16 an dem Näherungsschalter 43 "vorbeikommende" Signalstange 30 hat in dem gezeigten Ausführungsbeispiel keinen Einfluß auf das Feld des Näherungsschalters 43. Es ist jedoch möglich, auf den Signalring 39 zu verzichten und die Signalstange 30 so auszulegen, daß sie an ihrem oberen Ende 47 ein derartiges Teil trägt oder aufweist, das von dem Näherungsschalter 43 erfaßt werden kann, wenn auch nur ein Mal pro Umdrehung der Spindel 16.

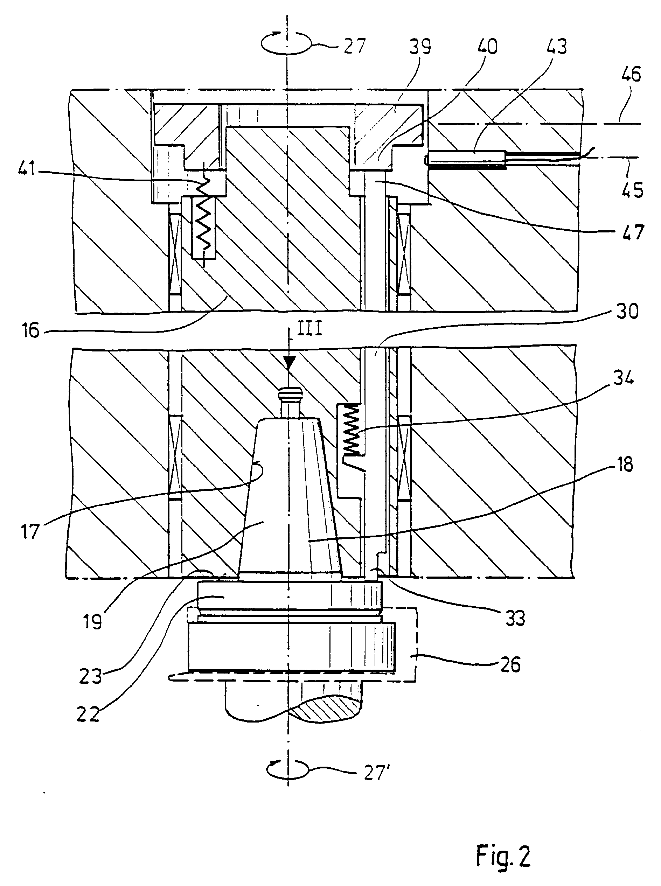

Der Werkzeughalter 18 wird jetzt koaxial in die Ausnehmung 17 eingefahren, indem entweder der Halter 26 nach oben fährt, oder der Spindelstock 12 zusammen mit der Spindel 16 nach unten bewegt wird. Diese Stellung des Werkzeughalters 18 ist in Fig. 2 dargestellt.

Der Steilkegel 12 ist vollständig in die Ausnehmung 17 eingedrungen, und der Nutenstein 33 ist mit der ringförmigen Stirnfläche 23 des Werkzeughalters 18 in Anlage gelangt. Beim weiteren Einschieben des Werkzeughalters 18 in die Ausnehmung 17 ist dabei die Signalstange 30 gegen die Kraft der Druckfeder 34 und der Zugfedern 41 nach oben bewegt worden und hat mit ihrem oberen Ende 47 den Ringflansch 40 und damit den Signalring 39 ebenfalls nach oben verschoben. Wegen der doch relativ hohen Kupplungsdrehzahl 27 der Spindel 16 kann der Mitnehmer 32 bei der anfänglich großen Relativgeschwindigkeit zwischen stehendem Werkzeughalter 18 und rotierender Spindel 16 nicht schon in die Nut 24 einrasten, wenn der Werkzeughalter 18 die kuppelbare Stellung einnimmt, dies ist erst nach dem Einnehmen der in Fig. 2 gezeigten Stellung möglich.

Der Signalring 39 befindet sich jetzt auf einer bei 46 angedeuteten Höhe, die deutlich oberhalb der Höhe 45 des induktiven Näherungsschalters 43 liegt. Der induktive Näherungsschalter 43, dem jetzt der Ringflansch 40 gegenüberliegt, ist nicht mehr von dem Signalring 39 bedämpft und meldet somit an die bereits erwähnte Ablaufsteuerung, daß sich der Werkzeughalter 18 in einer kuppelbaren Stellung befindet. Der Nutenstein 33 gleitet jetzt auf der Stirnfläche 23 entlang und "sucht" dabei die Nut 24.

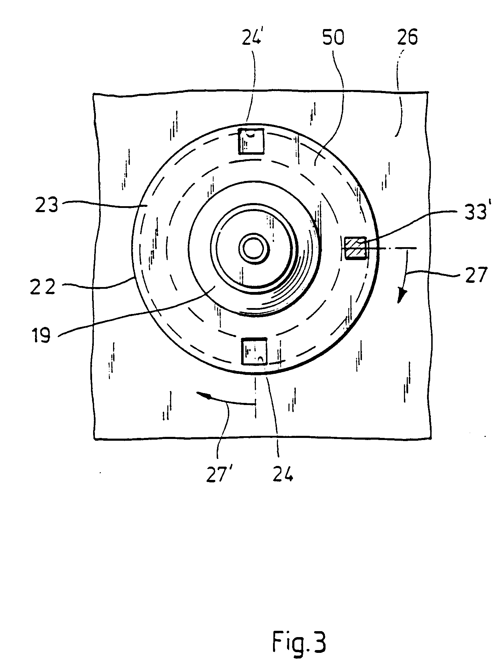

In Fig. 3 ist der Werkzeughalter 18 in einer Ansicht entlang des Pfeiles III aus Fig. 2 - also von oben - gezeigt. Es ist zu erkennen, daß der Werkzeughalter 18 zwei Nuten 24 und 24′ aufweist, von denen die Nut 24 radial weiter innen sitzt. Wie an dem bei 50 gestrichelt angedeuteten "Weg" des bei 33′ gestrichelt angedeuteten Nutensteines 33 auf der Stirnfläche 23 zu erkennen ist, kann der Nutenstein 33 lediglich in die Nut 24 eingreifen. Auf diese Weise ist sichergestellt, daß der Werkzeughalter 18 lagerichtig mit der Spindel 16 gekuppelt wird, wie dies insbesondere bei Ausdrehwerkzeugen erforderlich ist.

Während dieses Suchens des Nutensteines 33 bewegt sich dieser mit der Kupplungsdrehzahl 27 der Spindel 16, während der Werkzeughalter 18 mit einer geringeren, bei 27′ angedeuteten Geschwindigkeit umläuft, die durch den Mitnahmeeffekt des Nutensteines 33 bewirkt wird.

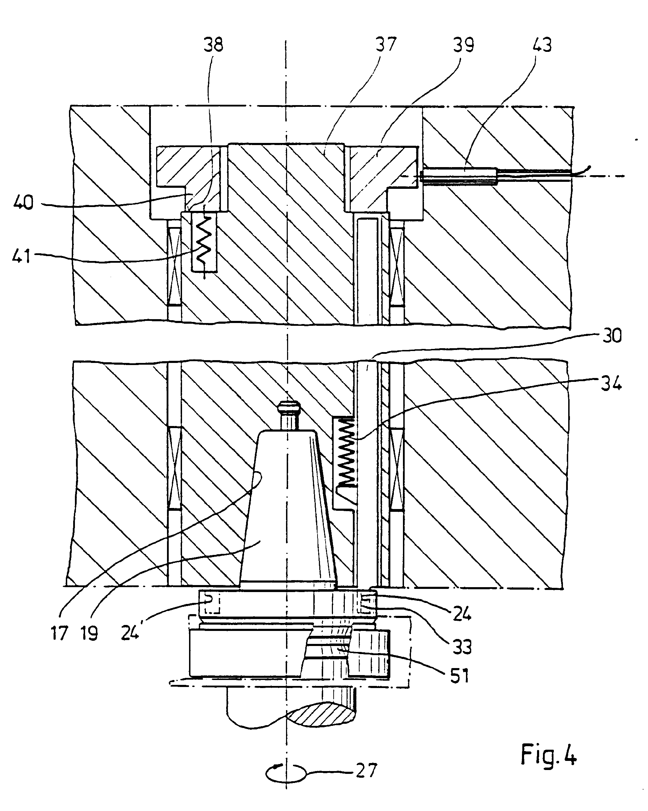

Die Drehzahl 27′ des Werkzeughalters 18 kann jedoch nicht die Kupplungsdrehzahl 27 der Spindel 16 erreichen, da der Werkzeughalter 18 in dem Greifer 26 unter Reibung geführt ist. Wie in Fig. 4 zu erkennen, weist der Werkzeughalter 18 eine bei 51 angedeutete V-Rille auf, die unter gleitender Reibung von einem entsprechenden Gegenprofil des Greifers 26 gehalten ist. Der Werkzeughalter 18 liegt dabei mit einer Kegelfläche auf einer Gegen-Kegelfläche des Greifers 26 auf. Die Anordnung ist dabei so getroffen, daß das durch Reibung des Nutensteines 33 an der Stirnfläche 23 bewirkte Reibmoment geringer ist als das durch die Reibung des Werkzeughalters 18 in dem Greifer 26 bewirkte Bremsmoment. Auf diese Weise bleibt immer eine relative Drehung zwischen der Spindel 16 und dem Werkzeughalter 18 aufrecht erhalten, so daß der Nutenstein 33 längs des Weges 50 seinen Weg in die Nut 24 sucht.

In Fig. 4 ist dieser eingekuppelte Zustand des Werkzeughalters 18 gezeigt. Der Nutenstein 33 ist in die Nut 24 eingedrungen und hat dadurch den Werkzeughalter 18 drehfest mit der Spindel 16 verriegelt. Die Druckfeder 34 hat sich dazu wieder entspannt und die Signalstange 30 ist so weit nach unten geraten, daß der von der Zugfeder 41 angezogene Ringflansch 40 wieder auf der Schulter 38 aufliegt.

Jetzt wird der induktive Näherungsschalter 43 wieder von dem Signalring 39 bedämpft, so daß der Sensor 48 jetzt das Vorliegen des gekuppelten Zustandes des Werkzeughalters 18 erkennt.

Infolge dieser Meldung ergreifen in den Fig. aus Übersichtlichkeitsgründen nicht gezeigte Spannmittel den Steilkegel 19, ziehen diesen noch fester in die Aufnahme 17 hinein und arretieren ihn so in der Spindel 16. Durch dieses Einspannen des Werkzeughalters 18 in der Spindel 16 kommt die V-Rille 51 von dem entsprechenden Gegenprofil des Werkzeughalters 26 frei, so daß der Werkzeughalter 18 jetzt frei in dem Greifer 26 umläuft.

Die während des Suchlaufes des Nutensteines zwischen dem Werkzeughalter 18 und dem Greifer 26 vorliegende Reibung ist so gering, daß es kaum zu einem Materialabrieb kommt.

## Patentansprüche

1. Werkzeugmaschine mit einer in einem Spindelstock (12) umlaufenden Spindel (16), mit zumindest einem Greifer (26), der einen Werkzeughalter (18) aus einer ungekuppelten Stellung in eine kuppelbare Stellung in die Spindel (16) einsetzt und mit Kupplungsmitteln (35) zum Überführen des in der kuppelbaren Stellung befindlichen Werkzeughalters (18) in einen gekuppelten Zustand, in dem der Werkzeughalter (18) drehfest mit der Spindel (16) verbunden ist, wobei ein Sensor (48) zum Erkennen des eingenommenen gekuppelten Zustandes vorgesehen ist und wobei, die Kupplungsmittel (35) einen an der Spindel (16) längsverschieblich gelagerten und zwischen zumindest zwei Lagen relativ zu der Spindel (16) verschiebbaren Mitnehmer (32) umfassen, der in dem gekuppelten Zustand des Werkzeughalters (18) in eine an diesem vorgesehene Ausnehmung (25) eingreift, dadurch gekennzeichnet, daß der Sensor (48) die relative Lage des Mitnehmers (32) zu der Spindel (16) erkennt.

2. Werkzeugmaschine nach Anspruch 1, dadurch gekennzeichnet, daß der Sensor (48) eine mit der Spindel (16) umlaufende Signalstange (31) umfaßt, die längsverschieblich an der Spindel (16) gelagert und dem Mitnehmer (32) so zugeordnet ist, daß sie der zu der Spindel (16) relativen Bewegung des Mitnehmers (32) folgt.

3. Werkzeugmaschine nach Anspruch 2, dadurch gekennzeichnet, daß der Sensor (48) eine der Signalstange (30) zugeordnete Erfassungseinrichtung (42) aufweist, die bezüglich des Spindelstockes (12) drehfest angeordnet ist.

4. Werkzeugmaschine nach Anspruch 3, dadurch gekennzeichnet, daß die Erfassungseinrichtung (42) in jeder relativen Winkellage zwischen der Spindel (16) und dem Spindelstock (12) auf die Signalstange (30) anspricht.

5. Werkzeugmaschine nach einem der Ansprüche 1 bis 4, dadurch gekennzeichnet, daß der Sensor (48) einen zu der Spindel (16) konzentrischen Signalring (39) aufweist, der an der Spindel (16) axial gelagert ist, und der mit den Kupplungsmitteln (35) derart zusammenwirkt, daß der Signalring (39) bei in kuppelbarer Stellung befindlichem Werkzeughalter (18) eine axial erste Stellung einnimmt, kontinuierlich mit einem ortsfesten Meßwertaufnehmer (42) zusammenwirkt sowie in diesem ein erstes Signal erzeugt, und daß der Signalring (39) bei in gekuppeltem Zustand befindlichem Werkzeughalter (18) eine axial zweite Stellung einnimmt, ebenfalls kontinuierlich mit dem ortsfesten Meßwertaufnehmer (42) zusammenwirkt sowie in diesem ein zweites Signal erzeugt.

6. Werkzeugmaschine nach einem der Ansprüche 1 bis 5, dadurch gekennzeichnet, daß Spannmittel vorgesehen sind, die den Werkzeughalter (18) in die Spindel (16) einspannen, wenn der Sensor (48) den eingenommenen gekuppelten Zustand des Werkzeughalters (18) erkannt hat.

7. Werkzeugmaschine nach einem der vorhergehenden Ansprüche, dadurch gekennzeichnet, daß eine Ablaufsteuerung vorgesehen ist, die die Spindel (16) in ihrer Drehzahl hochfährt, wenn der Sensor (48) den eingenommenen, gekuppelten Zustand des Werkzeughalters (18) erkannt hat.

8. Werkzeugmaschine nach einem der vorhergehenden Ansprüche, dadurch gekennzeichnet, daß der Greifer (26) den Werkzeughalter (18) bei umlaufender Spindel (16) in die kuppelbare Stellung bringt.

9. Werkzeugmaschine nach einem der vorhergehenden Ansprüche, dadurch gekennzeichnet, daß der Werkzeughalter (18) drehbar in dem Greifer (26) gelagert ist und auch im gekuppelten Zustand in diesem verbleibt.

10. Werkzeugmaschine nach einem der vorhergehenden Ansprüche, dadurch gekennzeichnet, daß der Greifer (26) zur Aufnahme von genormten Werkzeughaltern (18) eingerichtet ist und eine Kegelfläche aufweist, wobei der Werkzeughalter (18) beim Einführen in die rotierende Spindel (16) mit seiner Kegelfläche unter Reibung auf der Kegelfläche des Greifers (26) aufliegtund nach dem Einkuppeln von dieser um einen Luftspalt abgehoben ist.

## Claims

1. Machine tool having a spindle (16) which rotates in a headstock (12), and at least one gripper (26) for transferring a toolholder (18) from an uncoupled position into a ready-to-couple position in the spindle (16), and coupling means (35) for transferring the toolholder (18) being in the ready-to-couple position into a coupled state in which the toolholder (18) is connected with the spindle (16) for rotation, wherein a sensor (48) is provided for detecting that the coupled state is achieved, and wherein the coupling means (35) comprise a catch (32) which is mounted on said spindle (16) for displacement in the longitudinal direction between at least two positions relative to said spindle (16), and which in the coupled state of the toolholder (18) engages a recess (25) provided on the latter, characterized in that said sensor (48) detects the relative position of the catch (32) relative to said spindle (16).

2. Machine tool according to claim 1, characterized in that said sensor (48) comprises a signal rod (31) revolving together with said spindle (16), said rod being mounted on said spindle (16) for longitudinal displacement thereon and being related to said catch (32) such that it follows the movement of the catch (32) relative to said spindle (16).

3. Machine tool according to claim 2, characterized in that said sensor (48) comprises a detection unit (42) which is related to said signal rod (30) and which is fixed against rotation relative to said headstock (12).

4. Machine tool according to claim 3, characterized in that said detection unit (42) responds to said signal rod (30) in any relative angular position between said spindle (16) and said headstock (12).

5. Machine tool according to any of claims 1 - 4, characterized in that said sensor (48) comprises a signal ring (39), which is arranged concentrically to said spindle (16), is supported on said spindle (16) in axial direction, and which coacts with said coupling means (35) in such a way that when said toolholder (18) is in the ready-to-couple position, said signal ring (39) occupies an axially first position, coacts continuously with a stationary measuring sensor (42) generating therein a first signal, and that in the coupled condition of said toolholder (18) said signal ring (39) occupies an axially second position and coacts, likewise continuously, with said stationary measuring sensor (42) generating therein a second signal.

6. Machine tool according to any of claims 1 - 5, characterized in that clamping means are provided which clamp said toolholder (18) in said spindle (16) once said sensor (48) has detected that said toolholder (18) is in its coupled condition.

7. Machine tool according to any of the preceding claims, characterized in that a sequence control is provided which causes the spindle (16) to run up in its rotational speed once said sensor (48) has detected that said toolholder (18) is in its coupled condition.

8. Machine tool according to any of the preceding claims, characterized in that said gripper (26) transfers said toolholder (18) to the ready-to-couple position while said spindle (16) is revolving.

9. Machine tool according to any of the preceding claims, characterized in that said toolholder (18) is supported rotatably on said gripper (26) and remains in the gripper even in the coupled state.

10. Machine tool according to any of the preceding claims, characterized in that said gripper (26) is adapted for receiving a standardized toolholder (18) and comprises a conical surface, the conical surface of the toolholder (18) being in frictional contact with said conical surface of said gripper (26) during introduction of said toolholder (18) into the revolving spindle (16), and being spaced from the latter by an air gap after coupling of the toolholder (18).

## Revendications

1. Machine-outil comportant une broche (16) tournant dans un porte-broche (12), comportant au moins une pince (26) qui fait passer un porte-outil (18) d'une position désaccouplée dans une position d'accouplement dans la broche (16) et comportant des moyens d'accouplement (35) pour faire passer le porte-outil (18) se trouvant dans la position d'accouplement à l'état accouplé dans lequel le porte-outil (18) est relié solidaire en rotation avec la broche (16), dans laquelle un capteur (48) est prévu pour détecter l'état accouplé qui a été pris et dans laquelle les moyens d'accouplement (35) comportent un entraîneur (32) monté sur la broche (16) de manière à coulisser longitudinalement et pouvant coulisser par rapport à la broche (16), entre au moins deux positions, lequel entraîneur à l'état accouplé du porte-outil (18) s'engage dans un évidement (25) prévu sur celui-ci, caractérisé en ce que le capteur (48) détecte la position relative de l'entraîneur (32) par rapport à la broche (16).

2. Machine-outil selon la revendication 1, caractérisé en ce que le capteur (48) comprend une tige de signalisation (31) tournant avec la broche (16), qui est montée de manière à coulisser longitudinalement sur la broche (16) et est associée à l'entraîneur (32) de manière à suivre le déplacement relatif de l'entraîneur (32) par rapport à la broche (16).

3. Machine-outil selon la revendication 2, caractérisé en ce que le capteur (48) comporte un dispositif de détection (42) associé à la tige de signalisation (30), qui est monté solidaire en rotation par rapport au porte-broche (12).

4. Machine-outil selon la revendication 3, caractérisé en ce que le dispositif de détection (42) réagit à la tige de signalisation (30) dans toute position angulaire relative entre la broche (16) et le porte-broche (12).

5. Machine-outil selon l'une des revendications 1 à 4, caractérisé en ce que le capteur (48) comporte un anneau de signalisation (39) concentrique à la broche (16), qui est monté axialement sur la broche (16) et qui coopère avec les moyens d'accouplement (35) de manière que lorsque le porte-outil (18) se trouve en position d'accouplement, l'anneau de signalisation (39) prend une première position axiale, coopère en continu avec un capteur de valeurs de mesure (42) fixe et produit dans celui-ci un premier signal, et en ce que lorsque le porte-outil (18) se trouve à l'état accouplé, l'anneau de signalisation (39) prend une deuxième position axiale, coopère également en continu avec le capteur de valeurs de mesure fixe et produit dans celui-ci un deuxième signal.

6. Machine-outil selon l'une des revendications 1 à 5, caractérisé en ce qu'il est prévu des moyens de serrage qui serrent le porte-outil (18) dans la broche (16) lorsque le capteur (48) a détecté l'état accouplé qu'a pris le porte-outil (18).

7. Machine-outil selon l'une des revendications précédentes, caractérisé en ce qu'il est prévu une commande séquentielle qui augmente la vitesse de rotation de la broche (16) lorsque le capteur (48) a détecté l'état accouplé pris par le porte-outil (18).

8. Machine-outil selon l'une des revendications précédentes, caractérisé en ce que la pince (26) amène le porte-outil (18) dans la position d'accouplement, lorsque la broche (16) tourne.

9. Machine-outil selon l'une des revendications précédentes, caractérisé en ce que le porte-outil (18) est monté tournant dans la pince (26) et reste aussi dans celui-ci, à l'état accouplé.

10. Machine-outil selon l'une des revendications précédentes, caractérisé en ce que la pince (26) est équipée pour recevoir des porte-outils (18) normalisés et présente une surface conique, le porte-outil (18) reposant, lors de l'introduction dans la broche (16) tournante, avec sa surface conique sous friction sur la surface conique de la pince (26) et, après accouplement, le porte-outil (18) étant soulevé de celle-ci d'un entrefer.
